# EUROPÄISCHE PATENTSCHRIFT

(11) **EP 4 093 593 B1**
(45) Veröffentlichungstag und Bekanntmachung des Hinweises auf die Patenterteilung: **25.10.2023**
(21) Anmeldenummer: 21702399.3
(22) Anmeldetag: 21.01.2021
(51) Int. Cl.: B29C 48/255, B29C 48/25, B29C 48/10, B29C 48/08, B29C 48/05

(54) **VENTIL UND VERFAHREN ZUM TRANSPORTIEREN VON FLUIDEN**
VALVE AND METHOD OF TRANSPORTING FLUIDS
SOUPAPE ET PROCÉDÉ DE TRANSPORT DE FLUIDES

(30) Priorität: 21.01.2020 EP 20152893
(43) Veröffentlichungstag der Anmeldung: 30.11.2022
(73) Patentinhaber: Aurotec GmbH, 4844 Regau (AT); NORDSON CORPORATION, Westlake, OH 44145-1119 (US)
(72) Erfinder: HERMANN, Helmut, 48317 Drensteinfurt (DE); WÖSTMANN, Stefan, 48336 Sassenberg (DE); LONGIN, Michael, 8983 Bad Mitterndorf (AT); ZIKELI, Stefan, 4844 Regau (AT)
(74) Vertreter: SONN Patentanwälte OG
(86) Internationale Anmeldenummer: PCT/EP2021/051236
(87) Internationale Veröffentlichungsnummer: WO 2021/148489

(56) Entgegenhaltungen:
- EP-A1- 3 552 798
- EP-A2- 1 245 366
- WO-A1-2014/085842
- WO-A2-01/85386
- CN-A- 104 227 867

## Beschreibung

Die Erfindung betrifft ein Ventil mit einem Ventilgehäuse und einem Absperrelement, wobei das Ventilgehäuse einen Hohlraum zum Aufnehmen des Absperrelements, eine Einlassöffnung zum Einströmen eines Fluids in den Hohlraum und eine Auslassöffnung zum Ausströmen des Fluids aus dem Hohlraum aufweist, wobei das Absperrelement einen Führungskörper aufweist und linear bewegbar zumindest teilweise in dem Hohlraum des Ventilgehäuses zwischen der Einlassöffnung und der Auslassöffnung angeordnet ist, wobei das Absperrelement zumindest eine Ausnehmung zum Strömen des Fluids von der Einlassöffnung über die Ausnehmung zu der Auslassöffnung aufweist.

In vielen technischen Herstellungsprozessen ist es wünschenswert, auf kontinuierlicher Fließbasis mit konstant vollen und/oder teilweise gefüllten Materialzufuhrleitungen zu arbeiten. Ein Beispiel hierfür ist die Herstellung geformter Celluloseprodukte wie Fasern, Folien, Filme aus dem nachwachsenden Rohstoff Cellulose. Bei diesem Herstellungsprozess werden geformte Celluloseartikel durch Bildung von Celluloselösungen in einem organischen Lösungsmittel und durch Verspinnen der Cellulose/Lösungsschmelze zur Bildung einer Faser oder eines Films hergestellt. Eine bevorzugte Form des Lösungsmittels ist ein tertiäres Amin-N-oxid, typischerweise N-Methyl-Morpholin-N-oxid (NMMO). Diese Celluloselösungen sind üblicherweise hochviskos - mit einer Viskosität von typischerweise 50.000 bis 10.000.000 mPas. Solch ein Celluloselösungs-Herstellungsprozess wird in der EP 0 356 419 B1 beschrieben. Problematisch bei der Verarbeitung von Celluloselösungen ist deren hohe benötigte Verarbeitungstemperatur (üblicherweise 80 °C bis 130 °C) und die Instabilität der Celluloselösung bei diesen Temperaturen. Es ist daher erstrebenswert totraumfrei und stockungsfrei zu arbeiten.

Im Stand der Technik sind verschiedene Formen von Ventilen bekannt. Die DE 38 15 897 C2 zeigt eine Anfahrventil-Drossel-Einheit mit einem Austragskanal, der sich zu einem Extrusionswerkzeug weitet. Im Gehäuse der Anfahrventil-Drossel-Einheit ist eine Führungs- und Anfahrbohrung vorgesehen, in der ein Anfahrventil- und Drossel-Körper in Richtung seiner Längsachse, quer zur Achse des Austragskanals, verschiebbar und drehbar angeordnet ist. Der Anfahr- und Drossel-Körper weist zwei Verschließabschnitte auf, zwischen denen ein Drosselkörper angeordnet ist. An einem inneren Verschließabschnitt ist auf der dem Drosselkörper abgewandten Seite ein Anfahrventilkörper ausgebildet. Dieser soll einerseits Abdichten und andererseits eine Anfahr-Auslassöffnung in der Bohrung freilassen, die nach außen aus dem Ventil-Drossel-Gehäuse herausführt. Weitere Ventile sind beispielsweise aus der DE 27 512 25, der DE 10 2007 047 726 und der DE 10 2005 037 268 bekannt.

Weiters beschreiben die US 3,817,668 und die US 3,746,481 Schmelzpumpen, die Zahnräder als Mittel zur Steuerung des Fluidflusses verwenden. Diese haben sich jedoch bei der Einleitung, Verteilung, Steuerung des Flusses heißer Flüssigkeiten, insbesondere heißer Kunststoffflüssigkeitsschmelzen, nicht geeignet erwiesen und können nicht als Umschalt- und/oder Umlenk-Verteilventile eingesetzt werden.

Weitere Ventile zeigen die EP 3 552 798 A1, die CN 104 227 867 A, die WO 2014/085842 A1, die WO 01/85386 A2 und die EP 1 245 366 A2.

Die Aufgabe der vorliegenden Erfindung besteht darin, zumindest einzelne Nachteile des Standes der Technik zu lindern bzw. zu beheben. Die Erfindung setzt sich insbesondere zum Ziel, ein Ventil zur Verfügung zu stellen, in dem Fluidströmungen verbessert werden.

Diese Aufgabe wird durch ein Ventil mit einem Ventilgehäuse und einem Absperrelement, wobei das Ventilgehäuse einen Hohlraum zum Aufnehmen des Absperrelements, eine Einlassöffnung zum Einströmen eines Fluids in den Hohlraum und eine Auslassöffnung zum Ausströmen des Fluids aus dem Hohlraum aufweist, wobei das Absperrelement einen Führungskörper aufweist und linear bewegbar zumindest teilweise in dem Hohlraum des Ventilgehäuses zwischen der Einlassöffnung und der Auslassöffnung angeordnet ist, wobei das Absperrelement zumindest eine Ausnehmung zum Strömen des Fluids von der Einlassöffnung über die Ausnehmung zu der Auslassöffnung aufweist, wobei das Absperrelement eine weitere Ausnehmung zum Strömen des Fluids von der Einlassöffnung über die weitere Ausnehmung zu der Auslassöffnung aufweist und die weitere Ausnehmung ein prismenförmiger Durchbruch in dem Führungskörper des Absperrelements ist, wobei das Ventilgehäuse eine weitere Auslassöffnung aufweist und in einer Stellung des Absperrelements die weitere Auslassöffnung über die weitere Ausnehmung mit der Einlassöffnung fluidisch verbindbar ist, gelöst.

Demnach weist das Absperrelement zumindest eine Ausnehmung zur fluidischen Verbindung der Einlassöffnung mit der Auslassöffnung auf. Fluidische Verbindung bedeutet in diesem Zusammenhang, dass ein Fluid von der Einlassöffnung zur Auslassöffnung strömen kann. Die Ausnehmung des Absperrelements ist somit eine Durchflussausnehmung, die eine Fluidströmung zwischen der Einlassöffnung und der Auslassöffnung ermöglicht, sodass die Auslassöffnung geöffnet ist. Dabei ist das Absperrelement zumindest teilweise in dem Hohlraum des Ventilgehäuses zwischen der Einlassöffnung und der Auslassöffnung angeordnet, sodass das Absperrelement zumindest teilweise in Strömungsrichtung eines im Hohlraum strömenden Fluids zwischen der Einlassöffnung und der Auslassöffnung positioniert ist. Durch lineares Bewegen des Absperrelements wird die Ausnehmung linear verschoben, sodass die fluidische Verbindung der Einlass- mit der Auslassöffnung getrennt wird und ein von der Einlassöffnung in den Hohlraum des Ventilgehäuses strömendes Fluid durch das Absperrelement am Weiterströmen zur Auslassöffnung gehindert wird. Dadurch ist die Auslassöffnung durch das Absperrelement abgesperrt und geschlossen. Die lineare Bewegung des Absperrelements inklusive Ausnehmung erfolgt stufenlos, sodass die abzusperrende Auslassöffnung variabel zwischen 0 und 100 % abgesperrt werden kann. Dadurch ist eine stufenlose Regelung des durch die Auslassöffnung strömenden Fluids möglich.

Die Ausnehmung des Absperrelements ist eine Aussparung, die den Querschnitt des Absperrelements gegenüber eines der Ausnehmung benachbarten Abschnitts des Absperrelements reduziert. Dieser benachbarte Abschnitt dichtet bei Anordnung in dem Hohlraum den Hohlraum derart ab, dass ein über die Einlassöffnung in den Hohlraum strömendes Fluid an der Strömung zur Auslassöffnung gehindert wird, sodass die Auslassöffnung durch das Absperrelement abgesperrt ist. Wird das Absperrelement bewegt, sodass die Ausnehmung anstatt des benachbarten Abschnitts in dem Hohlraum angeordnet wird, dichtet das Absperrelement aufgrund des geringeren Querschnitts im Bereich der Ausnehmung den Hohlraum nicht ab, sodass durch die Ausnehmung in dem Hohlraum zumindest eine die Einlassöffnung mit der Auslassöffnung fluidisch verbindende Öffnung gebildet wird. Über diese zumindest eine Öffnung kann Fluid von der Einlassöffnung zur Auslassöffnung strömen. Aufgrund der stufenlosen Bewegung des Absperrelements kann die Ausnehmung teilweise in dem Hohlraum angeordnet sein, sodass die zumindest eine durch die Ausnehmung gebildete Öffnung nur von dem im Hohlraum angeordneten Teil der Ausnehmung gebildet wird, sodass die Größe der Öffnung durch Änderung des in dem Hohlraum angeordneten Anteils der Ausnehmung variiert werden kann.

Die Ausnehmung kann beispielsweise 5% bis 95%, vorzugsweise 10% bis 90%, oder 20% bis 80%, oder 30% bis 70%, der auf die Längsachse des Absperrelements (lineare Bewegungsrichtung) normalen Querschnittsfläche im Vergleich zur Querschnittsfläche des sperrenden benachbarten Abschnitts ausmachen. Diese Querschnittsfläche der Ausnehmung ist insbesondere an der größten Stelle der Ausnehmung in Längsachse gegeben, insbesondere bei graduell zunehmenden Ausnehmungen im Vergleich zum benachbarten Abschnitt. Die Ausnehmung, vorzugsweise in Form der Verfügung, macht bevorzugt mehr als 10 %, besonders bevorzugt mehr als 20 %, der Querschnittsfläche in Fließrichtung aus, d.h. das Absperrelement umfasst in diesem Fall weniger als 90 % bzw. weniger als 80 % der Querschnittsfläche, wobei die Verjüngung bzw. der Führungskörper im Bereich der Verjüngung vorzugsweise rotationssymmetrisch ist.

Das erfindungsgemäße Ventil kann zur totraumfreien Zuführung, Abführung, Schaltung und/oder Förderlimitierung von hochviskosen Flüssigkeiten und/oder Schmelzen verwendet werden. Durch die spezielle Ausgestaltung des Absperrelements kann das Ventil für hochviskose Flüssigkeiten und Schmelzen im Bereich der teilkristallinen Hochleistungsthermoplaste, wie PEK (Polyetherketon), PPEK (Polyphthalazinetherketon), PPS (Polyphenylensulfid), oder amorphen Hochleistungsthermoplaste wie PAI (Polyamidimid), PPSU (Polyphenylsulfon), PSU (Polysulfon) bzw. PES (Polyethersulfon) in den entsprechenden Herstellungsprozessen eingesetzt werden. Das erfindungsgemäße Ventil kann ebenfalls in den Herstellungsprozessen teilkristalliner und amorpher Thermoplaste, wie PA (Polyamid), PA6 (Polyamid 6; Polyamid aus Caprolactam), PA66 (Polyamid 66; Polyamid aus Hexamethylendiamin), PBT (Polybutylenterephthalat), POM (Polyoxymethylen), PET (Polyethylenterephthalat), PP (Polypropylen), PE (Polyethylen), PTFE (Polytetrafluorethylen) eingesetzt werden. Solche Verfahren und Herstellungsprozesse umfassen typischerweise Extrusions-, Spritz-, Blasform-, Beschichtungs- und Sprühtechniken, wie z. B. die Herstellung von synthetischen Textilfasern, Kunststoffschläuchen, Kunststofffolien und -filmen sowie Schutz- und/oder Isolierbeschichtungen für elektrische Leiterdrähte.

Bevorzugt wird das erfindungsgemäße Ventil bei der Herstellung von Cellulose oder bei Leitungen zum Transport von Celluloselösungen verwendet. Besonders bevorzugt wird das erfindungsgemäße Ventil beim Transport von Celluloselösungen verwendet, die als Extrusionsmedien für den Formungsprozess zum Einsatz kommen. Dabei wird die Cellulosekonzentration in für Lyocellverfahren üblichen Größen gewählt. So kann die Cellulosekonzentration in der Celluloselösung 4 % bis 23 %, vorzugsweise 6 % bis 20 %, insbesondere 8 % bis 18 % oder 10 % bis 16 %, sein (alle %-Angaben in Masse-%).

Vorzugsweise ist das Lösungsmittel der Celluloselösung ein tertiäres Aminoxid (Amin-N-oxid), insbesondere bevorzugt N-Methylmorpholin-N-oxid. Es kann alternativ oder zusätzlich ein ionisches Lösungsmittel sein. Derartige ionische Lösungsmittel sind beispielsweise in WO 03/029329; WO 2006/000197 A1; Parviainen et al., RSC Adv., 2015, 5, 69728-69737; Liu et al., Green Chem. 2017, DOI: 10.1039/c7gc02880f; Hauru et al., Cellulose (2014) 21:4471-4481; Fernändez et al. J Membra Sci Technol 2011, S:4; etc. beschrieben und enthalten vorzugsweise organische Kationen, wie z.B. Ammonium-, Pyrimidium- oder Imidazoliumkationen, vorzugsweise 1,3-Dialkyl-imidazolium Salze, wie Halogenide. Wasser wird auch hier vorzugsweise als Nicht-Lösungsmittel von Cellulose verwendet. Besonders bevorzugt ist eine Lösung von Cellulose und Butyl-3-methyl-imidazolium (BMIM), z.B. mit Chlorid als Gegenion (BMIMCl), oder 1-Ethyl-3-methyl-imidazolium (auch vorzugsweise als Chlorid, Acetat oder Diethylphosphat) oder 1-hexyl-3-methylimidazolium oder 1-hexyl-1-methylpyrrolidinium (vorzugsweise mit einem bis(trifluoromethylsulfonyl)amid Anion), und Wasser. Weitere ionische Lösungsmittel sind 1,5-Diazabicyclo[4.3.0]non-5-enium, vorzugsweise als Acetat; 1-Ethyl-3-methylimidazoliumacetat, 1,3-Dimethylimidazolium-acetat, 1-Ethyl-3-methylirnidazolium-chlorid, 1-Butyl3-methylimidazolium-acetat, 1-Ethyl-3-methylimidazolium-diethylphosphat, 1-Methyl-3- methylimidazolium-dimethylphosphat, 1-Ethyl-3-methylimidazolium-formiat, 1-Ethyl-3-methylimidazolium-octanoat, 1,3-Diethylimidazolium-acetat und 1-Ethyl-3-methylimidazolium-propionat.

Gemäß einer bevorzugten Ausführungsform ist der Führungskörper des Absperrelements prismenförmig, bevorzugt im Wesentlichen zylinderförmig. Dadurch kann das Absperrelement einfach in Längsrichtung des Führungskörpers in dem Hohlraum linear bewegt werden. Weiters ist eine einfache Herstellung des Absperrelements möglich. Die Ausnehmung ist dabei eine Aussparung in dem prismenförmigen Führungskörper, sodass der senkrecht zur Längsachse konstante Querschnitt des prismenförmigen Führungskörpers im Bereich der Ausnehmung kleiner ist. Dadurch wird im Bereich der Ausnehmung vom Absperrelement ein kleinerer Querschnitt abgesperrt, sodass Fluid das Absperrelement passieren und zur Auslassöffnung strömen kann.

Gemäß einer besonders bevorzugten Ausführungsform ist die Ausnehmung eine Verjüngung in dem Führungskörper, wobei die Verjüngung bevorzugt senkrecht zur Längsachse des (prismenförmigen) Führungskörpers angeordnet ist. Somit bildet die Ausnehmung eine den Führungskörper senkrecht zur Längsachse umlaufende Nut, entlang der ein Fluid das Absperrelement quer zur Längsachse des prismenförmigen Führungskörpers umströmen kann. Dadurch kann Fluid über die Einlassöffnung in den Hohlraum des Ventilgehäuses und weiter entlang der Verjüngung zur Auslassöffnung strömen. Die Nut weist bevorzugt eine von einer Parabel begrenzten Querschnittsfläche auf, sodass die Nut eine den Führungskörper umlaufende, rinnenförmige Ausnehmung bildet. Vorzugsweise ist die Verjüngung rotationssymmetrisch bezüglich der Längsachse des Führungskörpers. Bevorzugt nimmt der Querschnitt des Führungskörpers im Bereich der Verjüngung in Richtung der Längsachse zuerst monoton ab und daran anschließend monoton zu. Vorzugsweise verläuft die Verjüngung zwischen einem ersten Endpunkt und einem zweiten Endpunkt, die entlang der Längsachse des Führungskörpers voneinander beabstandet sind, in Richtung einer zentralen Längsachse des Führungskörpers.

Erfindungsgemäss ist die Ausnehmung ein Durchbruch in dem Führungskörper des Absperrelements. Dadurch ist eine einfache Herstellung der Ausnehmung möglich. Vorteilhafterweise ist der Durchbruch eine zylinderförmige Bohrung durch den Führungskörper, die bevorzugt senkrecht zur Längsachse des prismenförmigen Führungskörpers ausgerichtet ist. Der Durchbruch kann die Einlassöffnung und die Auslassöffnung des Ventilgehäuses fluidisch verbinden, sodass ein Fluid von der Einlassöffnung durch den Durchbruch zur Auslassöffnung strömen kann.

Es ist vorgesehen, dass das Absperrelement eine weitere Ausnehmung aufweist. Dadurch kann das Fluid durch lineares Bewegen des Absperrelements über die Ausnehmung und/oder die weitere Ausnehmung von der Einlassöffnung zur Auslassöffnung strömen. Dabei wird das Absperrelement durch lineares Bewegen derart in dem Ventilgehäuse positioniert, dass die Ausnehmung und/oder die weitere Ausnehmung die Einlassöffnung mit der Auslassöffnung fluidisch verbindet, sodass ein Fluid von der Einlassöffnung zur Auslassöffnung strömen kann. Mit der weiteren Ausnehmung kann sowohl in laufender Produktion, als auch beim Ausschleusen (bspw. mithilfe eines Anfahrventils), eine Probe eines Materials genommen werden. Weiters kann mit der weiteren Ausnehmung eine Druckentlastung vorgenommen werden.

Weiters ist es vorgesehen, dass die weitere Ausnehmung ein Durchbruch, nämlich ein prismenförmiger Durchbruch, bevorzugt ein zylinderförmiger weiterer Durchbruch, in dem Führungskörper des Absperrelements ist. Dadurch ist eine einfache Herstellung der weiteren Ausnehmung möglich. Wenn die Ausnehmung ein zylinderförmiger Durchbruch ist, kann der Durchmesser der Ausnehmung kleiner, gleich oder größer dem Durchmesser des zylinderförmigen weiteren Durchbruchs der weiteren Ausnehmung sein. Bei gleichem Durchmesser kann der weitere Durchbruch als Redundanz zum Durchbruch verwendet werden. Bei unterschiedlichen Formen der Ausnehmung und der weiteren Ausnehmung bzw. unterschiedlichen Durchmessern des zylinderförmigen Durchbruchs und des zylinderförmigen weiteren Durchbruchs lassen sich unterschiedliche Strömungsgeschwindigkeiten in dem Durchbruch und in dem weiteren Durchbruch erzielen.

Die weitere Ausnehmung ist ein prismenförmiger Durchbruch in dem Führungskörper des Absperrelements, wobei bevorzugt eine Längsachse des prismenförmigen Führungskörpers und eine Längsachse des prismenförmigen Durchbruchs einen Winkel zwischen 45° und 90°, besonders bevorzugt zwischen 60° und 85°, insbesondere zwischen 70° und 80°, einschließen. Dadurch kann eine weitere Auslassöffnung des Ventilgehäuses in einer Stellung des Absperrelements mit der Einlassöffnung fluidisch verbunden werden, wobei die weitere Auslassöffnung für eine Probenahme ausgestaltet sein kann. Bevorzugt ist die weitere Auslassöffnung benachbart zur Auslassöffnung an derselben Seite des Ventilgehäuses wie die Auslassöffnung angeordnet, sodass die Ausnehmung senkrecht zur Längsachse des prismenförmigen Führungskörpers verlaufend und die weitere Ausnehmung schräg zur Längsachse des prismenförmigen Körpers verlaufend ausgestaltet sein können. Bevorzugt ist bei einer Anordnung des Absperrelements in dem Hohlraum, bei der die weitere Ausnehmung an die weitere Auslassöffnung anschließt, die weitere Ausnehmung zur Weiterleitung des Fluids von der Einlassöffnung zur weiteren Auslassöffnung ausgebildet. Somit ist die Einlassöffnung über die weitere Ausnehmung mit der weiteren Auslassöffnung fluidisch verbunden.

Gemäß einer weiteren bevorzugten Ausführungsform weist der Hohlraum einen im Wesentlichen prismenförmigen ersten Abschnitt und einen im Wesentlichen prismenförmigen zweiten Abschnitt auf, wobei in dem zweiten Abschnitt das Absperrelement linear bewegbar zumindest teilweise aufgenommen ist. Bevorzugt ist der erste Abschnitt mit dem zweiten Abschnitt fluidisch miteinander verbunden, sodass ohne dem im zweiten Abschnitt angeordneten Absperrelement Fluid von dem ersten Abschnitt in den zweiten Abschnitt und umgekehrt strömen kann. Besonders bevorzugt weist die Grundfläche des prismenförmigen zweiten Abschnitts dieselbe Form wie die Grundfläche des prismenförmigen Führungskörpers des Absperrelements auf. Dabei kann die Grundfläche des Führungskörpers kleiner oder gleich der Grundfläche des zweiten Abschnitts sein, sodass das Absperrelement mit einer Toleranz größer gleich 0 in dem zweiten Abschnitt aufgenommen werden kann. Dadurch ist eine optimale Aufnahme des Absperrelements in dem Hohlraum des Ventilgehäuses möglich.

Gemäß einer besonders bevorzugten Ausführungsform kreuzen der erste und der zweite im Wesentlichen prismenförmige Abschnitt sich in einem Winkel zwischen 30° und 90°, bevorzugt zwischen 60° und 90°, besonders bevorzugt zwischen 80° und 90°, insbesondere von genau 90°. Bevorzugt sind die Einlassöffnung und die Auslassöffnung an dem ersten Abschnitt angeordnet, sodass das Fluid in dem ersten Abschnitt strömen kann und das Absperrelement in dem zweiten Abschnitt aufgenommen ist. Dadurch schließen die Achse, entlang der das Absperrelement bewegbar ist und die Achse, die in Strömungsrichtung des Fluids im Ventilgehäuse angeordnet ist, einen Winkel zwischen 30° und 90°, bevorzugt zwischen 60° und 90°, besonders bevorzugt zwischen 80° und 90°, insbesondere von genau 90°, ein. Somit kann das Absperrelement schräg oder quer zur Strömungsrichtung bewegt werden, sodass ein optimales Absperren einer Fluidströmung in dem Ventilgehäuse möglich ist.

Es ist günstig, wenn die Einlassöffnung an einer ersten Grundfläche des im Wesentlichen prismenförmigen ersten Abschnitts angeordnet ist, insbesondere deckungsgleich mit einer ersten Grundfläche des im Wesentlichen prismenförmigen ersten Abschnitts ist. Dadurch ist ein optimales totraumfreies Einströmen des Fluids in den ersten Abschnitt des Hohlraums in das Ventilgehäuse möglich. Bevorzugt strömt das Fluid von der Einlassöffnung über den ersten Abschnitt zum zweiten Abschnitt des Hohlraums, von wo es, je nach Stellung des Absperrelements, über die Ausnehmung weiter zur Auslassöffnung strömen oder vom Absperrelement abgesperrt und am Weiterströmen gehindert werden kann.

Weiters ist es günstig, wenn eine Auslassöffnung an einer der ersten Grundfläche gegenüberliegenden zweiten Grundfläche des im Wesentlichen prismenförmigen ersten Abschnitts angeordnet ist, insbesondere deckungsgleich mit einer der ersten Grundfläche gegenüberliegenden zweiten Grundfläche des im Wesentlichen prismenförmigen ersten Abschnitts ist. Bevorzugt sind die Einlassöffnung und die Auslassöffnung an einer Längsachse des ersten Abschnitts angeordnet, sodass eine optimale Fluidströmung in dem Hohlraum des Ventilgehäuses entstehen kann. Besonders bevorzugt ist die Achse, entlang der das Absperrelement bewegbar ist, senkrecht zur Längsachse des ersten Abschnitts ausgerichtet, sodass das Absperrelement senkrecht zur Fluidströmung in dem ersten Abschnitt des Hohlraums bewegbar ist. Dadurch kann das Fluid in dem Ventilgehäuse optimal mithilfe des Absperrelements abgesperrt werden.

Zur besseren Fluidströmung ist der erste Abschnitt im Wesentlichen zylinderförmig, wobei der Durchmesser des im Wesentlichen zylinderförmigen ersten Abschnitts in einem Kreuzungsbereich des ersten Abschnitts mit dem zweiten Abschnitt um 1% bis 20%, bevorzugt um 5% bis 10%, kleiner ist als bei der ersten Grundfläche.

Gemäß einer bevorzugten Ausführungsform ist der zweite Abschnitt eine das Ventilgehäuse durchbrechende zylinderförmige Bohrung, wobei die Bohrung auf zwei gegenüberliegenden Seiten des Ventilgehäuses einen ersten und einen zweiten Durchbruch bildet. Dadurch ist eine einfache und kostengünstige Herstellung des Ventilgehäuses möglich, indem der zweite Abschnitt des Hohlraums durch eine Bohrung hergestellt wird. Das Absperrelement kann somit einfach in dem zweiten Abschnitt des Hohlraums des Ventilgehäuses angeordnet und zu Wartungszwecken wieder aus dem zweiten Abschnitt des Hohlraums entnommen werden.

Gemäß einer besonders bevorzugten Ausführungsform ist der Führungskörper des Absperrelements im Wesentlichen zylinderförmig, wobei die Längsachse des zylinderförmigen zweiten Abschnitts mit der Längsachse des im Wesentlichen zylinderförmigen Führungskörpers des Absperrelements zusammenfällt. Dadurch ist eine optimale Aufnahme des Absperrelements in dem zweiten Abschnitt des Hohlraums möglich.

Gemäß einer besonders bevorzugten Ausführungsform weist das Absperrelement in dem Hohlraum eine Toleranz auf, sodass in dem Hohlraum zwischen dem Führungskörper des Absperrelements und dem Ventilgehäuse ein Spalt ausgebildet ist, durch den Fluid strömen kann. Dadurch kann eine dauerhafte Ablagerung des Fluids in dem Ventil reduziert oder sogar vermieden werden. Durch den Spalt kann ein definierter Fluidstrom den Führungskörper des Absperrelements umströmen, sodass kein Totraum in dem Hohlraum gebildet wird, in dem Fluid sich ablagern kann. Durch die Totraumfreiheit sind lange Verweilzeiten des Fluids in dem erfindungsgemäßen Ventil unterbunden. Vorteilhafterweise ist die Ausnehmung des Absperrelements derart ausgestaltet, dass diese bei Anströmung durch ein Fluid keinen Totraum ausbildet und eine optimale Weiterleitung des Fluids ermöglicht. Dies ist bspw. bei einer Verengung als Ausnehmung gegeben. Die Toleranz ist insbesondere (auch) im zur Verengung sperrenden benachbarten Abschnitt gegeben.

Gemäß einer weiteren besonders bevorzugten Ausführungsform ist zwischen dem Führungskörper des Absperrelements und dem Hohlraum eine Dichtung angeordnet, die das Absperrelement gegenüber dem Ventilgehäuse abdichtet. Dies hat den Vorteil, dass eine vollkommene Dichtheit des Absperrelements möglich ist.

Zur besseren Führung des Absperrelements in dem Hohlraum ist der im Wesentlichen zylinderförmige Führungskörper des Absperrelements zumindest teilweise derart in der Bohrung aufgenommen, dass das Absperrelement zumindest teilweise aus dem zweiten Durchbruch herausragt.

Es ist günstig, wenn in dem Bereich des zweiten Durchbruchs, in dem das Absperrelement aus dem Ventilgehäuse herausragt, Dichtungsringe, bevorzugt Leckageringe, in einer in den Führungskörper des Absperrelements eingefrästen Nut montiert sind. Diese Dichtungsringe sind bevorzugt aus einem flexiblen, gegen das Fluid beständigen Kunststoffring und aus einem Deckring aufgebaut. Besonders bevorzugt sind die Dichtungsringe am Ventilgehäuse in dem zweiten Abschnitt des Hohlraums an dem zweiten Durchbruch angeordnet, sodass diese den Spalt in dem zweiten Abschnitt des Hohlraums zwischen dem Ventilgehäuse und dem Führungskörper des Absperrelements abdichten. Abhängig von der Viskosität des im Ventil transportierten Fluids könnte es Szenarien geben, in denen die Menge des Fluids, die durch den Spalt in dem zweiten Abschnitt des Hohlraums zwischen dem Ventilgehäuse und dem Führungskörper aus dem Ventilgehäuse austritt, zu groß ist. Besonders bevorzugt können in diesem Fall die Dichtungsringe durch Anziehen von Befestigungsschrauben, die die Dichtungsringe am Ventilgehäuse befestigen, nach innen in den zweiten Abschnitt des Hohlraums in Richtung des Führungskörpers ausgebeult werden, sodass der Fluidstrom in dem Spalt in dem zweiten Abschnitt des Hohlraums zwischen dem Führungskörper und dem Ventilgehäuse reduziert wird.

Um das Absperrelement in dem Hohlraum zu bewegen ist es günstig, wenn das Ventil einen Antrieb zum linearen Bewegen des Absperrelements aufweist, wobei der Antrieb an einem aus dem zweiten Durchbruch herausragenden Ende des Absperrelements eingreift. Dadurch kann das Absperrelement platzsparend teilweise in dem Hohlraum des Ventilgehäuses angeordnet werden.

Die Erfindung betrifft weiters ein Ventilsystem mit einem Ventil wie hierin beschreiben, wobei in einem weiteren Hohlraum, der zur Einlassöffnung des Ventils führt, ein Anfahrventil vorgesehen ist.

In einer bevorzugten Ausführungsform des Ventilsystems weist das Anfahrventil auf:
einen Anfahrventil-Hohlraum, der mit dem weiteren Hohlraum verbunden ist und in den ein Anfahrventil-Absperrelement aufgenommen ist,
eine Anfahrventil-Einlassöffnung zum Einströmen eines Fluids vom weiteren Hohlraum in den Anfahrventil-Hohlraum,
eine Anfahrventil-Auslassöffnung zum Ausströmen des Fluids aus dem Anfahrventil-Hohlraum,
wobei das Anfahrventil-Absperrelement einen Anfahrventil-Führungskörper zum Absperren der Anfahrventil-Einlassöffnung aufweist, der beweglich in dem Anfahrventil-Hohlraum angeordnet ist.

Es ist günstig, wenn das Absperrelement des Ventils regelmäßig zur Spülung eines Spalts in dem zweiten Abschnitt des Hohlraums zwischen dem Ventilgehäuse und dem Führungskörper des Absperrelements oszilliert. Dadurch kann die Spülung des Spalts verbessert und ein Vercracken des Fluids in dem Spalt weiter vermindert werden. Bevorzugt oszilliert das Absperrelement in einer linearen Bewegung in Richtung der Längsachse des zylinderförmigen zweiten Abschnitts des Hohlraums. Besonders bevorzugt ist die Amplitude der oszillierenden Bewegung zwischen 5 und 10 mm.

Die Erfindung betrifft weiters ein Verfahren zum Transport von Fluiden, dadurch gekennzeichnet, dass ein Fluid in einem Ventilsystem wie hierin beschrieben transportiert wird. Dabei strömt das Fluid insbesondere entlang des weiteren Hohlraums, und sofern das Ventil offen ist, durch den Hohlraum zur Auslassöffnung. Sofern das Anfahrventil offen ist, strömt das Fluid durch den Anfahrventilhohlraum zur Anfahrventil-Auslassöffnung.

Es ist vorteilhaft, wenn das Ventilsystem in einem Anfahrmodus betrieben wird, wobei die Einlassöffnung mit dem Absperrelement abgesperrt ist und der Anfahrventil-Führungskörper den Anfahrventil-Hohlraum freigibt.

Vorteilhafterweise wird das Ventilsystem in einem Produktionsmodus, vorzugsweise nach dem Betrieb im Anfahrmodus betrieben, wobei die Ausnehmung in den Bereich des Hohlraums gebracht wird und die Anfahrventil-Einlassöffnung mit dem Anfahrventil-Führungskörper verschlossen wird. Auf diese Weise kann Druckentlastung und ein langsamerer Druckanstieg im Ventil erzielt werden.

Vorzugsweise wird eine Druckentlastung im Produktionsmodus durchgeführt, wobei das Anfahrventil teilweise oder vollständig zur Druckentlastung des Ventils geöffnet wird.

Vorteilhafterweise wird im Produktionsmodus oder im Anfahrmodus über die weitere Ausnehmung eine Probe des Fluids entnommen.

Die Erfindung wird nachstehend anhand in den Zeichnungen gezeigten, nicht einschränkenden Ausführungsbeispielen weiter erläutert.
Fig. 1 zeigt schematisch ein erfindungsgemäßes Ventil mit einem Ventilgehäuse und einem Absperrelement in einem geöffneten Zustand und einer geschlossenen Probenahme;
Fig. 2 zeigt schematisch das Ventil gemäß Fig. 1 in einem abgesperrten Zustand;
Fig. 3 zeigt schematisch das Ventil gemäß Fig. 1 in einem abgesperrten Zustand und einer geöffneten Probenahme;
Fig. 4 zeigt schematisch das Ventil gemäß Fig. 1 in einem teilweise geöffneten Zustand und einer geöffneten Probenahme;
Fig. 5 zeigt schematisch ein Anfahrventil mit einem zusätzlichen Ventil gemäß Fig. 1, wobei das Anfahrventil in einem abgesperrten Zustand ist (im Schnitt dargestellt);
Fig. 6 zeigt schematisch das Anfahrventil gemäß Fig. 5, wobei das Anfahrventil in einem geöffneten Zustand ist.

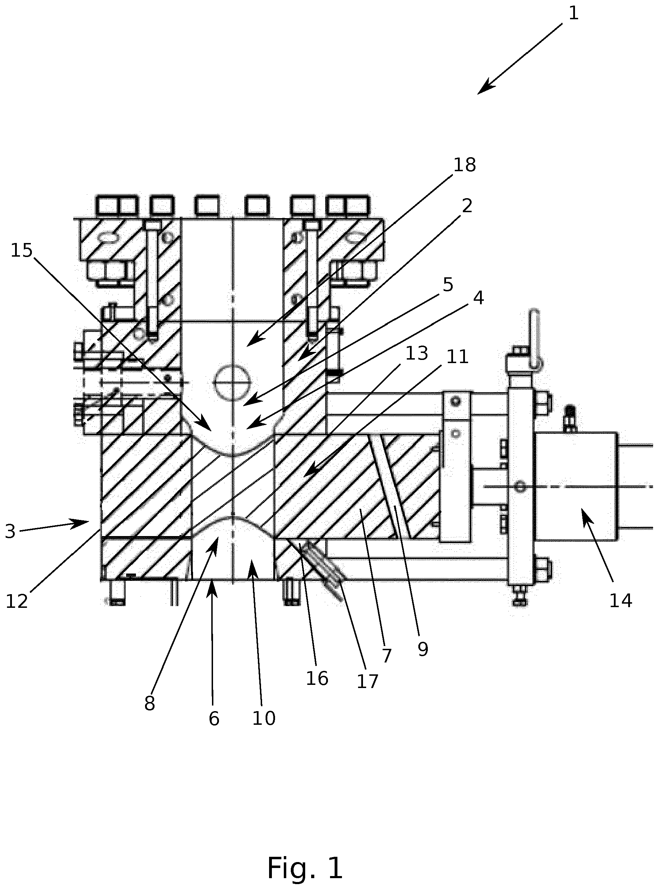

Fig. 1 bis 4 zeigen ein erfindungsgemäßes Ventil 1 mit einem Ventilgehäuse 2 und einem Absperrelement 3, wobei das Ventilgehäuse 2 einen Hohlraum 4 zum Aufnehmen des Absperrelements 3, eine Einlassöffnung 5 zum Einströmen eines Fluids in den Hohlraum 4 und eine Auslassöffnung 6 zum Ausströmen des Fluids aus dem Hohlraum 4 aufweist. Das Absperrelement 3 weist einen im Wesentlichen zylinderförmigen Führungskörper 7 auf und ist linear bewegbar in dem Hohlraum 4 des Ventilgehäuses 2 zwischen der Einlassöffnung 5 und der Auslassöffnung 6 angeordnet. Weiters weist der Führungskörper 7 eine Ausnehmung 8 zum Strömen des Fluids von der Einlassöffnung 5 über die Ausnehmung 8 zu der Auslassöffnung 6 auf. Die Ausnehmung 8 ist eine Verjüngung in dem Führungskörper 7, wobei die Verjüngung senkrecht zur Längsachse des im Wesentlichen zylinderförmigen Führungskörpers 7 angeordnet ist. Weiters weist das Absperrelement 3 eine weitere Ausnehmung 9 auf, die ein zylinderförmiger Durchbruch in dem Führungskörper 7 des Absperrelements 3 ist. Die Längsachse des prismenförmigen Führungskörpers 7 und die Längsachse der zylinderförmigen weiteren Ausnehmung 9 schließen einen Winkel von 75° ein.

Der Hohlraum 4 weist einen im Wesentlichen zylinderförmigen ersten Abschnitt 10 und einen zylinderförmigen zweiten Abschnitt 11 auf, wobei in dem zweiten Abschnitt 11 das Absperrelement 3 linear bewegbar teilweise aufgenommen ist. Dabei fällt die Längsachse des zylinderförmigen zweiten Abschnitts 11 mit der Längsachse des im Wesentlichen zylinderförmigen Führungskörpers 7 des Absperrelements 3 zusammen. Das Absperrelement 3 weist in dem zweiten Abschnitt 11 des Hohlraums 3 eine Toleranz auf, sodass in dem Hohlraum 4 zwischen dem Führungskörper 7 des Absperrelements 3 und dem Ventilgehäuse 2 ein Spalt ausgebildet ist, durch den Fluid strömen kann. Dadurch kann eine dauerhafte Ablagerung des Fluids in dem Ventil 1 reduziert oder sogar vermieden werden.

Der erste 10 und der zweite 11 Abschnitt kreuzen sich in einem Winkel von 90°, sodass der erste Abschnitt 10 senkrecht zum zweiten Abschnitt 11 angeordnet ist. Dadurch bilden der erste 10 und der zweite 11 Abschnitt zwei zueinander senkrecht angeordnete Tunnel, die einen kreuzförmigen Hohlraum 4 bilden. An einer ersten Grundfläche des im Wesentlichen zylinderförmigen ersten Abschnitts 10 ist die Einlassöffnung 5 angeordnet, die deckungsgleich mit der ersten Grundfläche des ersten Abschnitts 10 ist. An einer der ersten Grundfläche gegenüberliegenden zweiten Grundfläche des im Wesentlichen zylinderförmigen ersten Abschnitts 10 ist die Auslassöffnung 6 angeordnet, die deckungsgleich mit der zweiten Grundfläche des ersten Abschnitts 10 ist. Somit sind die Einlassöffnung 5 und die Auslassöffnung 6 an der Längsachse des im Wesentlichen zylinderförmigen ersten Abschnitts 10 angeordnet. Der erste Abschnitt 10 kreuzt den zweiten Abschnitt 11 des Hohlraums 4 in einem Bereich, der zwischen der Einlassöffnung 5 und der Auslassöffnung 6 angeordnet ist. Da das Absperrelement 3 in dem zweiten Abschnitt 11 aufgenommen ist, ist das Absperrelement 3 zwischen der Einlassöffnung 5 und der Auslassöffnung 6 angeordnet. Der zweite Abschnitt 11 ist in der gezeigten Ausführungsform eine das Ventilgehäuse 2 durchbrechende zylinderförmige Bohrung, wobei die Bohrung auf zwei gegenüberliegenden Seiten des Ventilgehäuses 2 einen ersten 12 und einen zweiten 13 Durchbruch bildet. Der Führungskörper 7 des Absperrelements 3 ist derart in der Bohrung aufgenommen, dass das Absperrelement 3 teilweise aus dem zweiten Durchbruch 13 herausragt. Das Ventil 1 weist einen Antrieb 14 zum linearen Bewegen des Absperrelements 3 in Richtung der Längsachse des im Wesentlichen zylinderförmigen Führungskörpers 7 auf, wobei der Antrieb 14 an dem aus dem zweiten Durchbruch 13 herausragenden Ende des Absperrelements 3 eingreift.

In der gezeigten Ausführungsform ist im Kreuzungsbereich 15 des ersten Abschnitts 10 mit dem zweiten Abschnitt 11 der Durchmesser des ersten Abschnitts 10 um 20 % kleiner, als bei der ersten Grundfläche bei der Einlassöffnung 5. Die Ausnehmung 8 ist derart ausgestaltet, dass sie eine senkrecht zur Längsachse des im Wesentlichen zylinderförmigen Führungskörpers 7, ringförmige Aussparung ist. Die Breite der ringförmigen Aussparung ist gleich dem Durchmesser des ersten Abschnitts 10 im Kreuzungsbereich 15. Weiters weist die ringförmige Aussparung einen Querschnitt auf, der durch eine Parabel und eine zur Leitgeraden der Parabel parallele Achse begrenzt ist. Durch die Ausnehmung 8 in dem Führungskörper 7 ist das Absperrelement 3 knochenförmig, wobei der konstante Durchmesser des im Wesentlichen zylinderförmigen Führungskörpers 7 aufgrund der Ausnehmung 8 um bis zu 40 % reduziert ist.

Das Ventilgehäuse 2 weist eine weitere Auslassöffnung 16 auf, an der ein Probeentnahmeventil 17, z.B. ein Kugelhahn, zum Öffnen und Schließen der weiteren Auslassöffnung 16 angeordnet ist. Die weitere Auslassöffnung 16 ist fluidisch mit dem zweiten Abschnitt 11 des Hohlraums 4 verbunden, sodass Fluid von dem zweiten Abschnitt 11 des Hohlraums 4 über die weitere Auslassöffnung 16 und dem geöffneten Probeentnahmeventil 17 aus dem Ventil 1 strömen kann. Dabei ist die weitere Auslassöffnung 16 an der gleichen Seite des zweiten Abschnitts 11 des Hohlraums 4 wie die Auslassöffnung 6 angeordnet, wobei die weitere Auslassöffnung 16 an einer gedachten Verlängerung der zweiten Grundfläche des ersten Abschnitts 10 des Hohlraums 4 angeordnet ist.

In der in den Fig. 1 bis 4 gezeigten Ausführungsform des erfindungsgemäßen Ventils 1 strömt ein Fluid über einen zylinderförmigen Rohrabschnitt 18 zur kreisförmigen, an den Rohrabschnitt 18 angrenzenden Einlassöffnung 5 des Ventilgehäuses 2. Über die Einlassöffnung 5 strömt das Fluid weiter in den ersten Abschnitt 10 des Hohlraums 4 des Ventilgehäuses 2 zum Kreuzungsbereich 15, in dem der zweite 11 den ersten Abschnitt 10 des Hohlraums 4 kreuzt. In dem zweiten Abschnitt 11 ist das Absperrelement 3 aufgenommen, wobei das Absperrelement 3 in Fig. 1 derart in dem zweiten Abschnitt 11 positioniert ist, dass die Ausnehmung 8 in dem Kreuzungsbereich 15 des ersten 10 mit dem zweiten 11 Abschnitt angeordnet ist. Dadurch, dass in dem Kreuzungsbereich 15 der Querschnitt des Absperrelements 3 aufgrund der Ausnehmung 8 in dem im Wesentlichen zylinderförmigen Führungskörper 7 geringer ist als der Querschnitt des zylinderförmigen zweiten Abschnitts 11, bildet die Ausnehmung 8 Öffnungen in dem Kreuzungsbereich 15 zwischen dem Absperrelement 3 und dem Ventilgehäuse 2, sodass das Fluid in dem ersten Abschnitt 10 des Hohlraums 4 durch den Kreuzungsbereich 15 zur Auslassöffnung 6 strömt. Dadurch, dass in dem zweiten Abschnitt 11 des Hohlraums 4 zwischen dem Führungskörper 7 des Absperrelements 3 und dem Ventilgehäuse 2 ein Spalt ausgebildet ist, kann eine definierte Menge an Fluid in den Spalt zum Spülen des Spalts strömen.

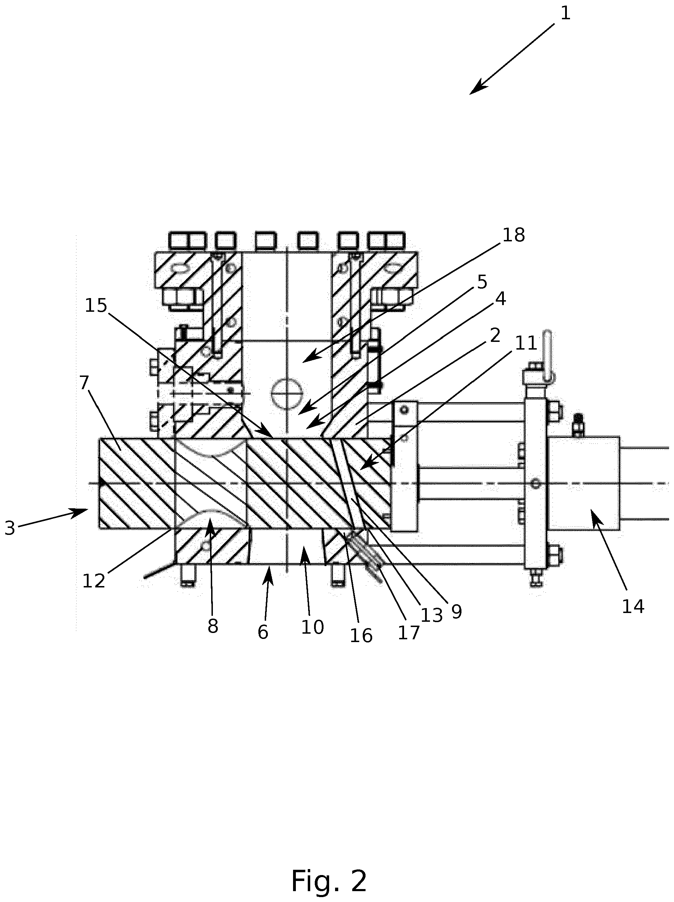

Mithilfe des Antriebs 14 kann das Absperrelement 3 bewegt werden, sodass, wie in Fig. 2 gezeigt, die Ausnehmung 8 nicht mehr in dem Kreuzungsbereich 15 des ersten 10 und des zweiten 11 Abschnitts des Hohlraums 4 angeordnet ist. Dabei ist weder die Ausnehmung 8, noch die weitere Ausnehmung 9 in dem Kreuzungsbereich 15 angeordnet und mit dem ersten Abschnitt 10 des Hohlraums 4 fluidisch verbunden. Dadurch, dass der im Wesentlichen zylinderförmige Führungskörper 7 des Absperrelements 3 bis auf einen Spalt den gesamten Querschnitt des zweiten Abschnitts 11 des Hohlraums 4 ausfüllt, ist bei der in Fig. 2 gezeigten Positionierung des Absperrelements 3 der Kreuzungsbereich 15 bis auf einen kleinen Spalt vollständig von dem Führungskörper 7 des Absperrelements 3 ausgefüllt, sodass der Führungskörper 7 den Kreuzungsbereich 15 absperrt. Somit ist der Bereich des ersten Abschnitts 10 des Hohlraums 4, der an die Einlassöffnung 5 angrenzt, durch das Absperrelement 3 von dem Bereich des ersten Abschnitts 10, der an die Auslassöffnung 6 angrenzt, abgesperrt. Dadurch kann - bis auf eine kleine Menge über den Spalt - kein Fluid in dem ersten Abschnitt 10 des Hohlraums 4 von der Einlassöffnung 5 zur Auslassöffnung 6 bzw. zur weiteren Auslassöffnung 16 strömen.

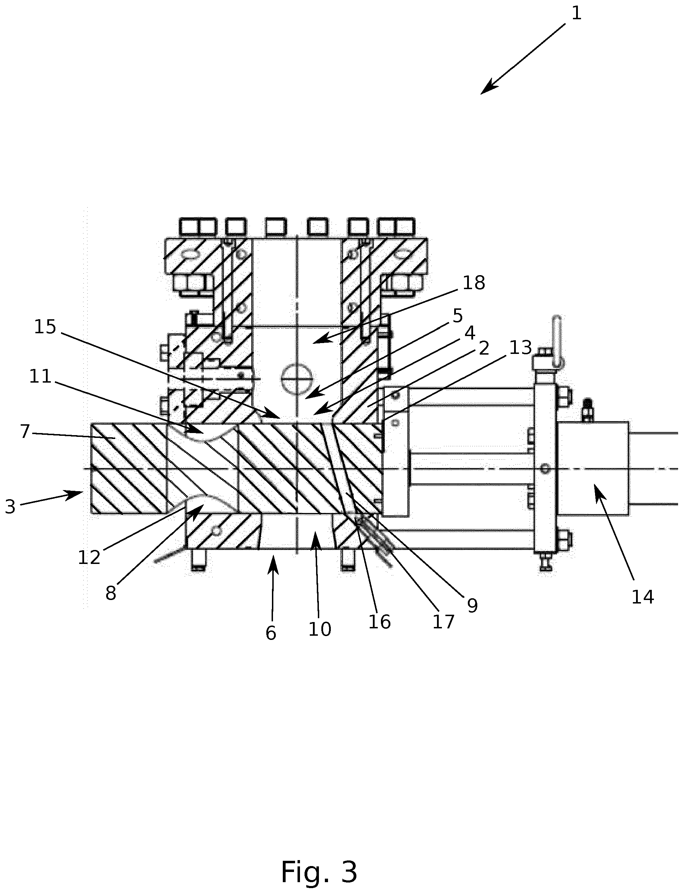

Durch Bewegen des Absperrelements 3 kann dieses wie in Fig. 3 gezeigt derart in dem zweiten Abschnitt 11 des Hohlraums 4 angeordnet sein, dass die weitere Ausnehmung 9 derart teilweise in dem Kreuzungsbereich 15 angeordnet ist, dass die weitere Ausnehmung 9 den Bereich des ersten Abschnitts 11, der an die Einlassöffnung 5 angrenzt, mit der weiteren Auslassöffnung 16 fluidisch verbindet. Dadurch, dass die Längsachse des im Wesentlichen zylinderförmigen Führungskörpers 7 und die Längsachse der zylinderförmigen weiteren Ausnehmung 9 einen Winkel von z.B. 75° einschließen, ist die weitere Ausnehmung 9 zwar mit der Einlassöffnung 5, nicht jedoch mit der Auslassöffnung 6, sondern mit der zur Auslassöffnung 6 versetzten weiteren Auslassöffnung 16 fluidisch verbunden. Über den schräg zur Längsachse im Führungskörper 7 angeordneten Durchbruch, der die weitere Ausnehmung 9 bildet, kann Fluid von der Einlassöffnung 5 über den ersten Abschnitt des Hohlraums 4 zur weiteren Auslassöffnung 16 strömen, an der beispielsweise eine Probenahme des Fluids erfolgen kann. Dadurch, dass die weitere Ausnehmung 9 nicht mit dem Bereich des ersten Abschnitts 10 fluidisch verbunden ist, der an die Auslassöffnung 6 angrenzt, und dadurch, dass die Ausnehmung 8 nicht im Kreuzungsbereich 15 des ersten 10 mit dem zweiten 11 Abschnitt des Hohlraums 4 angeordnet ist, ist die Auslassöffnung 6 nicht mit der Einlassöffnung fluidisch verbunden, sodass kein Fluid durch die Auslassöffnung 6 aus dem Ventil 1 strömt.

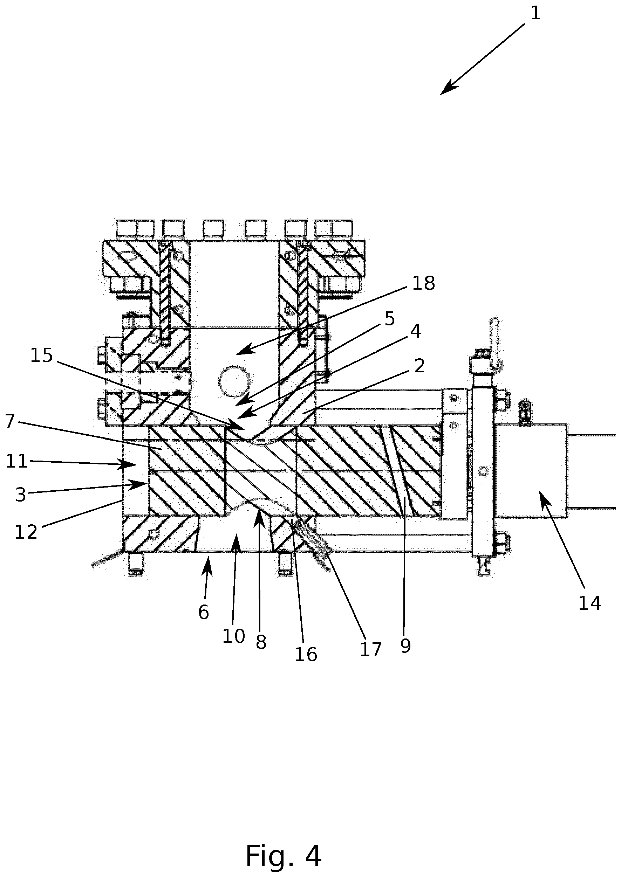

Fig. 4 zeigt das Ventil 1 gemäß der in Fig. 1 gezeigten Ausführungsform, wobei das Absperrelement 3 derart in dem zweiten Abschnitt 11 des Hohlraums 4 angeordnet ist, dass die Ausnehmung 8 teilweise in dem Kreuzungsbereich 15 des ersten 10 und des zweiten 11 Abschnitts des Hohlraums 4 positioniert ist. Dabei grenzt ein Teil der Ausnehmung 8, der nicht in dem Kreuzungsbereich 15 positioniert ist, an die weitere Auslassöffnung 16 an, sodass die durch die Ausnehmung 8 gebildete Öffnung in dem Kreuzungsbereich 15 die Einlassöffnung 5 sowohl mit der Auslassöffnung 6 als auch mit der weiteren Auslassöffnung 16 fluidisch verbindet. Somit kann ein Fluid, dass über die Einlassöffnung 5 in den ersten Abschnitt 10 des Hohlraums 4 einströmt, über die mithilfe der Ausnehmung 8 gebildete Öffnung durch den Kreuzungsbereich 15 weiter zur Auslassöffnung 6 und zur weiteren Auslassöffnung 16 strömen. Dabei ist die Öffnung zur Auslassöffnung 6 kleiner als bei der in Fig. 1 gezeigten Positionierung des Absperrelements 3, sodass weniger Fluid durch die Auslassöffnung 6 als bei der in Fig. 1 gezeigten Positionierung strömen kann. Dadurch ist beispielsweise gleichzeitig eine Strömung des Fluids durch die Auslassöffnung 6 als auch eine Probenahme des Fluids über die weitere Auslassöffnung 16 möglich. Durch die stufenlose Bewegung des Absperrelements 3 in dem zweiten Abschnitt 11 des Hohlraums 4 kann der Anteil der Ausnehmung 8, die in dem Kreuzungsbereich 15 angeordnet ist, stufenlos zwischen 0 % und 100 % variiert werden, sodass die Größe der durch die Ausnehmung 8 gebildete Öffnung zum Durchströmen des Fluids stufenlos geändert werden kann. Dadurch ist eine stufenlose Regelung des Fluidstroms durch das Ventil 1 möglich.

Das erfindungsgemäße Ventil 1 kann beispielsweise im Herstellungsprozess einer Cellulose/Aminoxidlösung verwendet werden. Durch die Ausgestaltung des Absperrelements 3 wird verhindert, dass sich in Anlagentoträumen Spinnmasse ansammeln und zersetzen kann. Auch bei längeren Lagerungen von Spinnmasse im Ventil 1 kann sich das Absperrelement 3 im Ventilgehäuse 2 nicht festfressen, da das Absperrelement 3 periodisch in Rotation bzw. in eine periodische translatorische Bewegung versetzt und gespült werden kann. Somit stellt die vorliegende Erfindung auch ein Verfahren zum Transport einer Lösung von Cellulose in einem wässrigen tertiären Aminoxid durch ein Ventil 1 dar, bei dem die Fließgeschwindigkeit der Celluloselösung in dem Ventilgehäuse 2 periodisch eingestellt und variiert werden kann, um zu gewährleisten, dass ein sicheres Ableiten, Verteilen und der sichere Transport der Cellulose/Aminoxid Lösung ermöglicht wird.

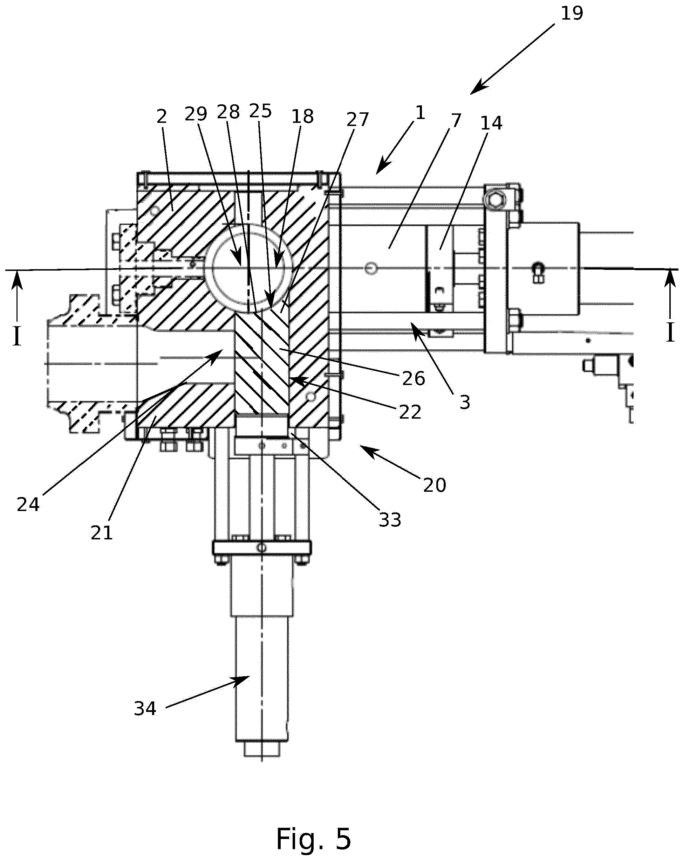

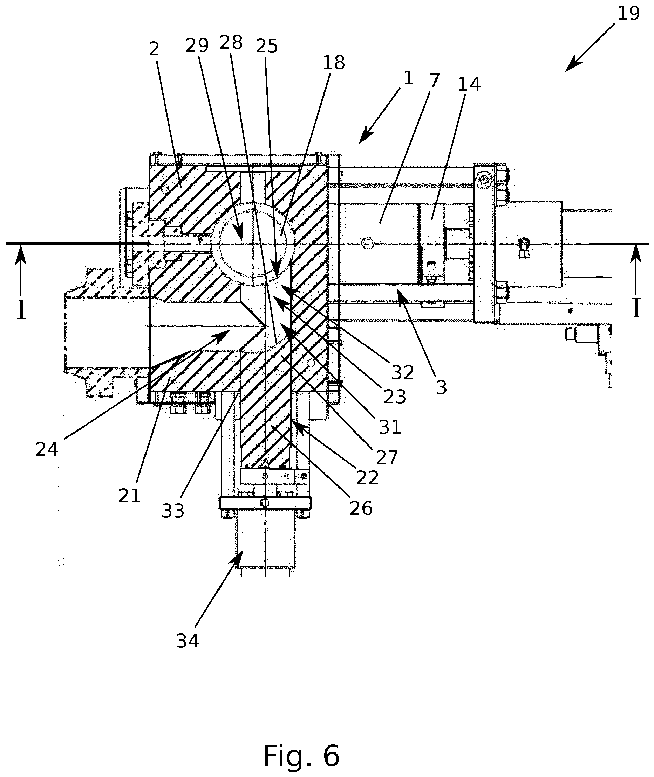

Die in den Fig. 1 bis 4 gezeigte Ausführungsform des erfindungsgemäßen Ventils 1 kann als Teil eines Ventilsystems 19 verwendet werden. Dazu wird, wie in Fig. 5 und 6 gezeigt, das erfindungsgemäße Ventil 1 mit einem Anfahrventil 20 kombiniert. Das Anfahrventil 20 weist ein Ventilgehäuse 21 und ein Absperrelement 22 auf, wobei das Ventilgehäuse 21 des Anfahrventils 20 einen Hohlraum 23 zum Aufnehmen des Absperrelements 22, eine Einlassöffnung 25 zum Einströmen eines Fluids in den Hohlraum 23 und eine Auslassöffnung 24 zum Ausströmen des Fluids aus dem Hohlraum 23 des Anfahrventils 20 aufweist. Das Absperrelement 22 des Anfahrventils 20 weist einen Führungskörper 26 und einen Absperrvorsprung 27 zum Absperren der Einlassöffnung 25 auf und ist beweglich in dem Hohlraum 23 des Ventilgehäuses 21 des Anfahrventils 20 angeordnet. Der Absperrvorsprung 27 weist eine gekrümmte Anliegefläche 28 zum Anliegen an der Einlassöffnung 25 auf. Die gekrümmte Anliegefläche 28 ist kreisbogenförmig, um an der Einlassöffnung 25 des Ventilgehäuses 21 des Anfahrventils 20, die an einer Mantelfläche eines zylinderförmigen weiteren Hohlraums 29 angeordnet ist, anliegen zu können. Dabei verbindet die Einlassöffnung 25 den Hohlraum 23 und den senkrecht auf den Hohlraum 23 stehenden, weiteren Hohlraum 29. Der Führungskörper 26 des Absperrelements 22 des Anfahrventils 20 ist im Wesentlichen zylinderförmig, wobei der Absperrvorsprung 27 an einer Grundfläche 30 des im Wesentlichen zylinderförmigen Führungskörpers 26 angeordnet ist. Der Hohlraum 23 weist einen zylinderförmigen ersten Abschnitt 31 und einen zweiten Abschnitt 32 auf, der zwischen dem ersten Abschnitt 31 und dem weiteren Hohlraum 29 angeordnet ist. Dabei ist der zylinderförmige weitere Hohlraum 29 in Längsrichtung des zylinderförmigen ersten Abschnitts 31 des Hohlraums 23 angeordnet, wobei die Längsachse des zylinderförmigen weiteren Hohlraums 29 senkrecht zur Längsachse des zylinderförmigen ersten Abschnitts 31 ist. Der Absperrvorsprung 27 weist dieselbe Form wie der zweite Abschnitt 32 des Hohlraums 29 des Ventilgehäuses 21 des Anfahrventils 20 auf. Das Absperrelement 22 des Anfahrventils 20 ist derart in dem Hohlraum 23 angeordnet, dass die Längsachse des zylinderförmigen ersten Abschnitts 31 des Hohlraums 23 mit der Längsachse des im Wesentlichen zylinderförmigen Führungskörpers 26 des Absperrelements 22 zusammenfällt.

Die Auslassöffnung 24 ist an der Mantelfläche des zylinderförmigen ersten Abschnitts 31 des Hohlraums 23 angeordnet. Der erste Abschnitt 31 des Hohlraums 23 ist eine das Ventilgehäuse 21 des Anfahrventils 20 durchbrechende zylinderförmige Bohrung, die an der dem zweiten Abschnitt 32 des Hohlraums 23 gegenüberliegenden Seite einen Durchbruch 33 bildet. Der Führungskörper 26 ist derart in der Bohrung aufgenommen, dass das Absperrelement 22 teilweise aus dem Durchbruch 33 herausragt. Das Anfahrventil 20 weist einen Antrieb 34 zum linearen Bewegen des Absperrelements 22 in Richtung der Längsachse des im Wesentlichen zylinderförmigen Führungskörpers 26 auf, wobei der Antrieb 34 an dem aus dem Durchbruch 33 herausragenden Ende des Absperrelements 22 eingreift.

In Fig. 5 ist das Anfahrventil 20 im geschlossenen Zustand gezeigt, wobei die gekrümmte Anliegefläche 28 des Absperrvorsprungs 27 an der Einlassöffnung 25 anliegt. Zusätzlich liegt der Führungskörper 26 des Absperrelements 22 an der Auslassöffnung 24 an und sperrt diese ab, sodass kein Fluid von der Einlassöffnung 25 in den Hohlraum 23 des Anfahrventils 20 und weiter zur Auslassöffnung 24 strömen kann. In dieser Position ist der Absperrvorsprung 27 in dem zweiten Abschnitt 32 des Hohlraums 23 und der Führungskörper 26 in dem ersten Abschnitt 31 des Hohlraums 23 angeordnet. Um in dem Anfahrventil 20 einen Totraum des Fluids zu vermeiden, kann ein Spalt in dem Hohlraum 23 zwischen dem Ventilgehäuse 21 und dem Führungskörper 26 ausgebildet sein, sodass Fluid durch die Einlassöffnung 25 über den Spalt in den Hohlraum 23 und weiter zu der Auslassöffnung 24 strömen kann. Dadurch kann eine lange Verweilzeit des Fluids in dem Anfahrventil 20 vermieden werden. Bei linearer Bewegung des Absperrelements 22 des Anfahrventils 20 in Längsrichtung des zylinderförmigen ersten Abschnitts 31 des Hohlraums 23 in Richtung des Durchbruchs 33 bewegt sich der Führungskörper 26 des Absperrelements 22 an der Auslassöffnung 24 vorbei. Bei diesem Vorbeibewegen des Führungskörpers 26 wird die Auslassöffnung 24 stufenlos geöffnet, sodass ein Fluid aus dem weiteren Hohlraum 29 durch die Einlassöffnung 25 in den Hohlraum 23 und weiter zu der Auslassöffnung 24 fließen kann. Dabei wird das Fluid in dem Hohlraum 23 durch die Grundfläche 30 des im Wesentlichen zylinderförmigen Führungskörpers 26 und die gekrümmte Anliegefläche 28 des Absperrvorsprungs 27 derart geleitet, sodass die Strömung des Fluids im Hohlraum 23 verbessert wird. Bei weiterer linearer Bewegung des Absperrelements 22 in Richtung des Durchbruchs 33 wird die Auslassöffnung 24 weiter geöffnet, bis der Führungskörper 26 die Auslassöffnung 24 nicht mehr abdeckt und, wie in Fig. 6 gezeigt, die Auslassöffnung 24 vollständig geöffnet ist. Dabei berührt die Grundfläche 30 des im Wesentlichen zylinderförmigen Führungskörpers 26 die Auslassöffnung 24 an dem der Einlassöffnung 25 abgewandten Seite. Mithilfe der Grundfläche 30 und der gekrümmten Anliegefläche 28 des Absperrvorsprungs 27 wird das Fluid in dem Hohlraum 23 in Richtung Auslassöffnung 24 geleitet, wobei im Vergleich zu einem Absperrelement ohne Absperrvorsprung 27 die Strömung des Fluids verbessert ist.

Der weitere Hohlraum 29 des Anfahrventils 20 entspricht dem zylinderförmigen Rohrabschnitt 18 gemäß den Fig. 1 bis 4. Das strömende Fluid gelangt über die Einlassöffnung 5 des Ventilgehäuses 2 des erfindungsgemäßen Ventils 1 über den ersten Abschnitt 11 des Hohlraums 4 und die Ausnehmung 8 des Absperrelements 3 zur Auslassöffnung 6 des Ventilgehäuses 2 des erfindungsgemäßen Ventils 1 und strömt somit im zylinderförmigen Rohrabschnitt 18, von wo es über die Einlassöffnung 25 des Ventilgehäuses 21 des Anfahrventils 20 zur Auslassöffnung 24 gelangt. Das in Fig. 1 gezeigte Ventil 1 entspricht dabei den in Fig. 5 und 6 dargestellten Schnitt I-I.

## Patentansprüche

1. Ventil (1) mit einem Ventilgehäuse (2) und einem Absperrelement (3), wobei das Ventilgehäuse (2) einen Hohlraum (4) zum Aufnehmen des Absperrelements (3), eine Einlassöffnung (5) zum Einströmen eines Fluids in den Hohlraum (4) und eine Auslassöffnung (6) zum Ausströmen des Fluids aus dem Hohlraum (4) aufweist, wobei das Absperrelement (3) einen Führungskörper (7) aufweist und linear bewegbar zumindest teilweise in dem Hohlraum (4) des Ventilgehäuses (2) zwischen der Einlassöffnung (5) und der Auslassöffnung (6) angeordnet ist, wobei das Absperrelement (3) zumindest eine Ausnehmung (8) zum Strömen des Fluids von der Einlassöffnung (5) über die Ausnehmung (8) zu der Auslassöffnung (6) aufweist, **dadurch gekennzeichnet, dass** das Absperrelement (3) eine weitere Ausnehmung (9) zum Strömen des Fluids von der Einlassöffnung (5) über die weitere Ausnehmung (9) zu der Auslassöffnung (6) aufweist und die weitere Ausnehmung (9) ein prismenförmiger Durchbruch in dem Führungskörper (7) des Absperrelements (3) ist, wobei das Ventilgehäuse eine weitere Auslassöffnung (16) aufweist und in einer Stellung des Absperrelements die weitere Auslassöffnung (16) über die weitere Ausnehmung (9) mit der Einlassöffnung (5) fluidisch verbindbar ist.

2. Ventil (1) nach Anspruch 1, **dadurch gekennzeichnet, dass** der Führungskörper (7) des Absperrelements (3) prismenförmig, bevorzugt im Wesentlichen zylinderförmig, ist.

3. Ventil (1) nach Anspruch 1 oder 2, **dadurch gekennzeichnet, dass** die Ausnehmung (8) eine Verjüngung in dem Führungskörper (7) ist, wobei die Verjüngung bevorzugt senkrecht zu einer Längsachse des Führungskörpers (7) angeordnet ist.

4. Ventil (1) nach Anspruch 1 oder 2, **dadurch gekennzeichnet, dass** die Ausnehmung (8) ein Durchbruch in dem Führungskörper (7) des Absperrelements (3) ist.

5. Ventil (1) nach einem der Ansprüche 1 bis 4, **dadurch gekennzeichnet, dass** eine Längsachse des Führungskörpers (7) und eine Längsachse der prismenförmigen weiteren Ausnehmung (9) einen Winkel zwischen 45° und 90°, besonders bevorzugt zwischen 60° und 85°, insbesondere zwischen 70° und 80°, einschließen.

6. Ventil (1) nach einem der Ansprüche 1 bis 5, **dadurch gekennzeichnet, dass** an der weiteren Auslassöffnung (16) ein Probeentnahmeventil (17) zum Öffnen und Schließen der weiteren Auslassöffnung (16) angeordnet ist.

7. Ventil (1) nach einem der Ansprüche 1 bis 6, **dadurch gekennzeichnet, dass** der Hohlraum (4) einen im Wesentlichen prismenförmigen ersten Abschnitt (10) und einen im Wesentlichen prismenförmigen zweiten Abschnitt (11) aufweist, wobei in dem im Wesentlichen prismenförmigen zweiten Abschnitt (11) das Absperrelement (3) linear bewegbar zumindest teilweise aufgenommen ist, wobei vorzugsweise sich der erste im Wesentlichen prismenförmige Abschnitt (10) und der zweite im Wesentlichen prismenförmige Abschnitt (11) in einem Winkel zwischen 30° und 90°, bevorzugt zwischen 60° und 90°, besonders bevorzugt zwischen 80° und 90°, insbesondere von genau 90°, kreuzen.

8. Ventil (1) nach Anspruch 7, **dadurch gekennzeichnet, dass** die Einlassöffnung (5) an einer ersten Grundfläche des im Wesentlichen prismenförmigen ersten Abschnitts (10) angeordnet ist, insbesondere deckungsgleich mit einer ersten Grundfläche des im Wesentlichen prismenförmigen ersten Abschnitts (10) ist, wobei vorzugsweise eine Auslassöffnung (6) an einer der ersten Grundfläche gegenüberliegenden zweiten Grundfläche des im Wesentlichen prismenförmigen ersten Abschnitts (10) angeordnet ist, insbesondere deckungsgleich mit einer der ersten Grundfläche gegenüberliegenden zweiten Grundfläche des im Wesentlichen prismenförmigen ersten Abschnitts (10) ist.

9. Ventil (1) nach einem der Ansprüche 7 oder 8, **dadurch gekennzeichnet, dass** der zweite im Wesentlichen prismenförmige Abschnitt (11) eine das Ventilgehäuse (2) durchbrechende zylinderförmige Bohrung ist, wobei die Bohrung auf zwei gegenüberliegenden Seiten des Ventilgehäuses (2) einen ersten und einen zweiten Durchbruch bildet, wobei vorzugsweise der Führungskörper (7) des Absperrelements (3) im Wesentlichen zylinderförmig ist, wobei die Längsachse des zylinderförmigen zweiten Abschnitts (11) mit der Längsachse des im Wesentlichen zylinderförmigen Führungskörpers (7) des Absperrelements (3) zusammenfällt.

10. Ventil (1) nach Anspruch 9, **gekennzeichnet durch** einen Antrieb (14) zum linearen Bewegen des Absperrelements (3), wobei der Antrieb (14) an einem aus dem zweiten Durchbruch (13) herausragenden Ende des Absperrelements (3) eingreift.

11. Ventilsystem (19), **gekennzeichnet durch** ein Ventil (1) nach einem der Ansprüche 1 bis 10, wobei in einem weiteren Hohlraum (29), der zur Einlassöffnung (5) des Ventils (1) führt, ein Anfahrventil (20) vorgesehen ist.

12. Ventilsystem (19) nach Anspruch 11, **dadurch gekennzeichnet, dass** das Anfahrventil (20) aufweist:
einen Anfahrventil-Hohlraum (23), der mit dem weiteren Hohlraum (29) verbunden ist und in den ein Anfahrventil-Absperrelement (22) aufgenommen ist,
eine Anfahrventil-Einlassöffnung (25) zum Einströmen eines Fluids vom weiteren Hohlraum (29) in den Anfahrventil-Hohlraum (23),
eine Anfahrventil-Auslassöffnung (24) zum Ausströmen des Fluids aus dem Anfahrventil-Hohlraum (23),
wobei das Anfahrventil-Absperrelement (22) einen Anfahrventil-Führungskörper (26) zum Absperren der Anfahrventil-Einlassöffnung (25) aufweist, der beweglich in dem Anfahrventil-Hohlraum (23) angeordnet ist.

13. Verfahren zum Transport von Fluiden, **dadurch gekennzeichnet, dass** ein Fluidstrom in einem Ventil (1) nach einem der Ansprüche 1 bis 10 geregelt und/oder gesteuert wird, wobei vorzugsweise das Absperrelement (3) des Ventils (1) regelmäßig zur Spülung eines Spalts in dem Hohlraum (4) zwischen dem Ventilgehäuse (2) und dem Führungskörper (7) des Absperrelements (3) oszilliert.

14. Verfahren zum Transport von Fluiden, **dadurch gekennzeichnet, dass** ein Fluid in einem Ventilsystem (19) nach einem der Ansprüche 11 oder 12 transportiert wird.

15. Verfahren nach Anspruch 14, **dadurch gekennzeichnet, dass** das Ventilsystem (19) in einem Anfahrmodus betrieben wird, wobei die Einlassöffnung (5) mit dem Absperrelement (3) abgesperrt ist und der Anfahrventil-Führungskörper (26) den Anfahrventil-Hohlraum (23) freigibt, und/oder
dass das Ventilsystem (19) in einem Produktionsmodus, vorzugsweise nach dem Betrieb im Anfahrmodus, betrieben wird, wobei die Ausnehmung (6) in den Bereich des Hohlraums (4) gebracht wird und die Anfahrventil-Einlassöffnung (25) mit dem Anfahrventil-Führungskörper (26) verschlossen wird.

## Claims

1. Valve (1) having a valve housing (2) and a shut-off element (3), the valve housing (2) comprising a cavity (4) for receiving the shut-off element (3) an inlet opening (5) for inflow of a fluid into the cavity (4) and an outlet opening (6) for outflow of the fluid from the cavity (4), the shut-off element (3) comprising a guide body (7) and being arranged in a linearly movable manner at least partially in the cavity (4) of the valve housing (2) between the inlet opening (5) and the outlet opening (6), the shut-off element (3) having at least one recess (8) for flow of the fluid from the inlet opening (5) via the recess (8) to the outlet opening (6), **characterised in that** the shut-off element (3) has a further recess (9) for flow of the fluid from the inlet opening (5) via the further recess (9) to the outlet opening (6), and the further recess (9) is a prism-shaped aperture in the guide body (7) of the shut-off element (3), the valve housing having a further outlet opening (16) and the further outlet opening (16), in one position of the shut-off element, being fluidically connectable to the inlet opening (5) via the further recess (9).

2. Valve (1) according to claim 1, **characterised in that** the guide body (7) of the shut-off element (3) is prism-shaped, preferably substantially cylindrical.

3. Valve (1) according to either claim 1 or claim 2, **characterised in that** the recess (8) is a tapering in the guide body (7), the tapering preferably being arranged perpendicularly to a longitudinal axis of the guide body (7).

4. Valve (1) according to either claim 1 or claim 2, **characterised in that** the recess (8) is an aperture in the guide body (7) of the shut-off element (3).

5. Valve (1) according to any of claims 1 to 4, **characterised in that** a longitudinal axis of the guide body (7) and a longitudinal axis of the prism-shaped further recess (9) enclose an angle between 45° and 90°, particularly preferably between 60° and 85°, in particular between 70° and 80°.

6. Valve (1) according to any of claims 1 to 5, **characterised in that** a sampling valve (17) for opening and closing the further outlet opening (16) is arranged at the further outlet opening (16).

7. Valve (1) according to any of the claims 1 to 6, **characterised in that** the cavity (4) comprises a substantially prism-shaped first portion (10) and a substantially prism-shaped second portion (11), the shut-off element (3) being at least partially received in the substantially prism-shaped second portion (11) in a linearly movable manner, the first substantially prism-shaped portion (10) and the second substantially prism-shaped portion (11) preferably intersecting at an angle between 30° and 90°, preferably between 60° and 90°, particularly preferably between 80° and 90°, in particular of exactly 90°.

8. Valve (1) according to claim 7, **characterised in that** the inlet opening (5) is arranged on a first base surface of the substantially prism-shaped first portion (10), in particular is congruent with a first base surface of the substantially prism-shaped first portion (10), an outlet opening (6) preferably being arranged on a second base surface of the substantially prism-shaped first portion that is opposite the first base surface (10), in particular being congruent with a second base surface of the substantially prism-shaped first portion that is opposite the first base surface (10).

9. Valve (1) according to either claim 7 or claim 8, **characterised in that** the second substantially prism-shaped portion (11) is a cylindrical bore passing through the valve housing (2), the bore forming a first and a second aperture on two opposite sides of the valve housing (2), the guide body (7) of the shut-off element (3) preferably being substantially cylindrical, the longitudinal axis of the cylindrical second portion (11) coinciding with the longitudinal axis of the substantially cylindrical guide body (7) of the shut-off element (3).

10. Valve (1) according to claim 9, **characterised by** a drive (14) for linear movement of the shut-off element (3), the drive (14) engaging at an end of the shut-off element (3) that projects from the second aperture (13).

11. Valve system (19) **characterised by** a valve (1) according to any of claims 1 to 10, a start-up valve (20) being provided in a further cavity (29) leading to the inlet opening (5) of the valve (1).

12. Valve system (19) according to claim 11, **characterised in that** the start-up valve (20) comprises:
a start-up valve cavity (23) which is connected to the further cavity (29) and in which a start-up valve shut-off element (22) is received,
a start-up valve inlet opening (25) for inflow of a fluid from the further cavity (29) into the start-up valve cavity (23),
a start-up valve outlet opening (24) for outflow of the fluid from the start-up valve cavity (23),
the start-up valve shut-off element (22) comprising a start-up valve guide body (26) for shutting off the start-up valve inlet opening (25), which guide body is movably arranged in the start-up valve cavity (23).

13. Method for transporting fluids, **characterised in that** a fluid flow is controlled in an open-loop and/or closed loop manner in a valve (1) according to any of claims 1 to 10, the shut-off element (3) of the valve (1) regularly oscillating in order to flush a gap in the cavity (4) between the valve housing (2) and the guide body (7) of the shut-off element (3).

14. Method for transporting fluids, **characterised in that** a fluid is transported in a valve system (19) according to either claim 11 or claim 12.

15. Method according to claim 14, **characterised in that** the valve system (19) is operated in a start-up mode, the inlet opening (5) being shut off by the shut-off element (3) and the start-up valve guide body (26) releasing the start-up valve cavity (23), and/or
**in that** the valve system (19) is operated in a production mode, preferably after operation in the start-up mode, the recess (6) being brought into the region of the cavity (4) and the start-up valve inlet opening (25) being closed by the start-up valve guide body (26).

## Revendications

1. Vanne (1) avec un logement de vanne (2) et un élément d'obturation (3), dans laquelle le logement de vanne (2) présente un espace creux (4) pour la réception de l'élément d'obturation (3), une ouverture d'admission (5) pour l'afflux d'un fluide jusque dans l'espace creux (4) et une ouverture d'évacuation (6) pour l'échappement du fluide hors de l'espace creux (4), dans laquelle l'élément d'obturation (3) présente un corps de guidage (7) et est agencé de façon à pouvoir être déplacé linéairement au moins partiellement dans l'espace creux (4) du logement de vanne (2) entre l'ouverture d'admission (5) et l'ouverture d'évacuation (6), dans laquelle l'élément d'obturation (3) présente au moins un évidement (8) pour l'écoulement du fluide depuis l'ouverture d'admission (5) via l'évidement (8) vers l'ouverture d'évacuation (6), **caractérisée en ce que** l'élément d'obturation (3) présente un autre évidement (9) pour l'écoulement du fluide depuis l'ouverture d'admission (5) via l'autre évidement (9) vers l'ouverture d'évacuation (6) et l'autre évidement (9) est une percée prismatique dans le corps de guidage (7) de l'élément d'obturation (3), dans laquelle le logement de vanne présente une autre ouverture d'évacuation (16) et dans une position de l'élément d'obturation l'autre ouverture d'évacuation (16) peut être fluidiquement reliée à l'ouverture d'admission (5) via l'autre évidement (9).

2. Vanne (1) selon la revendication 1, **caractérisée en ce que** le corps de guidage (7) de l'élément d'obturation (3) est prismatique, de préférence essentiellement cylindrique.

3. Vanne (1) selon la revendication 1 ou 2, **caractérisée en ce que** l'évidement (8) est un rétrécissement dans le corps de guidage (7), dans laquelle le rétrécissement est agencé de préférence perpendiculairement à un axe longitudinal du corps de guidage (7).

4. Vanne (1) selon la revendication 1 ou 2, **caractérisée en ce que** l'évidement (8) est une percée dans le corps de guidage (7) de l'élément d'obturation (3).

5. Vanne (1) selon l'une des revendications 1 à 4, **caractérisée en ce qu'**un axe longitudinal du corps de guidage (7) et un axe longitudinal de l'autre évidement (9) prismatique forment un angle entre 45° et 90°, particulièrement de préférence entre 60° et 85°, en particulier entre 70° et 80°.

6. Vanne (1) selon l'une des revendications 1 à 5, **caractérisée en ce qu'**une vanne d'échantillonnage (17) pour l'ouverture et la fermeture de l'autre ouverture d'évacuation (16) est agencée contre l'autre ouverture d'évacuation (16).

7. Vanne (1) selon l'une des revendications 1 à 6, **caractérisée en ce que** l'espace creux (4) présente une première section (10) essentiellement prismatique et une seconde section (11) essentiellement prismatique, dans laquelle l'élément d'obturation (3) est reçu dans la seconde section (11) essentiellement prismatique au moins partiellement de façon à pouvoir être déplacé linéairement, dans laquelle de préférence la première section (10) essentiellement prismatique et la seconde section (11) essentiellement prismatique se croisent selon un angle entre 30° et 90°, de préférence entre 60° et 90°, particulièrement de préférence entre 80° et 90°, en particulier d'exactement 90°.

8. Vanne (1) selon la revendication 7, **caractérisée en ce que** l'ouverture d'admission (5) est agencée contre une première surface de la première section (10) essentiellement prismatique, en particulier est en superposition avec une première surface de la première section (10) essentiellement prismatique, dans laquelle de préférence une ouverture d'évacuation (6) est agencée contre une seconde surface, opposée à la première surface, de la première section (10) essentiellement prismatique, en particulier est en superposition avec une seconde surface, opposée à la première surface, de la première section (10) essentiellement prismatique.

9. Vanne (1) selon l'une des revendications 7 ou 8, **caractérisée en ce que** la seconde section (11) essentiellement prismatique est un alésage cylindrique perçant le logement de vanne (2), dans laquelle l'alésage forme une première et une seconde percée sur deux côtés opposés du logement de vanne (2), dans laquelle de préférence le corps de guidage (7) de l'élément d'obturation (3) est essentiellement cylindrique, dans laquelle l'axe longitudinal de la seconde section (11) cylindrique coïncide avec l'axe longitudinal du corps de guidage (7) essentiellement cylindrique de l'élément d'obturation (3).

10. Vanne (1) selon la revendication 9, **caractérisée par** un entraînement (14) pour un déplacement linéaire de l'élément d'obturation (3), dans laquelle l'entraînement (14) s'engage contre une extrémité de l'élément d'obturation (3) faisant saillie depuis la seconde percée (13).

11. Système de vanne (19), **caractérisé par** une vanne (1) selon l'une des revendications 1 à 10, dans lequel est prévue une vanne de démarrage (20) dans un autre espace creux (29) qui mène à l'ouverture d'admission (5) de la vanne (1).

12. Système de vanne (19) selon la revendication 11, **caractérisé en ce que** la vanne de démarrage (20) présente :
un espace creux de vanne de démarrage (23) qui est relié à l'autre espace creux (29) et dans lequel est reçu un élément d'obturation de vanne de démarrage (22),
une ouverture d'admission de vanne de démarrage (25) pour l'afflux d'un fluide depuis l'autre espace creux (29) jusque dans l'espace creux de vanne de démarrage (23),
une ouverture d'évacuation de vanne de démarrage (24) pour l'échappement du fluide hors de l'espace creux de vanne de démarrage (23),
dans lequel l'élément d'obturation de vanne de démarrage (22) présente un corps de guidage de vanne de démarrage (26) pour l'obturation de l'ouverture d'admission de vanne de démarrage (25), lequel est agencé dans l'espace creux de vanne de démarrage (23) de façon à pouvoir se déplacer.

13. Procédé de transport de fluides, **caractérisé en ce qu'**un écoulement de fluide est réglé et/ou commandé dans une vanne (1) selon l'une des revendications 1 à 10, dans lequel de préférence l'élément d'obturation (3) de la vanne (1) oscille régulièrement entre le logement de vanne (2) et le corps de guidage (7) de l'élément d'obturation (3) pour le rinçage d'un interstice dans l'espace creux (4).

14. Procédé de transport de fluides, **caractérisé en ce qu'**un fluide est transporté dans un système de vanne (19) selon l'une des revendications 11 ou 12.

15. Procédé selon la revendication 14, **caractérisé en ce que** le système de vanne (19) est exploité dans un mode de démarrage, dans lequel l'ouverture d'admission (5) est obturée avec l'élément d'obturation (3), et le corps de guidage de vanne de démarrage (26) libère l'espace creux de vanne de démarrage (23), et/ou
**en ce que** le système de vanne (19) est exploité dans un mode de production, de préférence après l'exploitation dans le mode de démarrage, dans lequel l'évidement (6) est amené dans la zone de l'espace creux (4) et l'ouverture d'admission de vanne de démarrage (25) est refermée avec le corps de guidage de vanne de démarrage (26).
